Europäisches Patentamt

European Patent Office

Office européen des brevets

(19)

(11) Numéro de publication: **0 022 696**
**B2**

(12) ## NOUVEAU FASCICULE DE BREVET EUROPEEN

(45) Date de publication du nouveau fascicule du brevet: **16.08.90**

(51) Int. Cl.⁵: **A 23 J 1/20,** A 23 C 9/142, A 61 K 37/02

(21) Numéro de dépôt: **80400945.4**

(22) Date de dépôt: **24.06.80**

(54) **Produit enrichi en alpha-lactalbumine, obtention à partir de lactosérum et applications dudit produit.**

(30) Priorité: **26.06.79 FR 7916482**

(43) Date de publication de la demande: **21.01.81 Bulletin 81/03**

(45) Mention de la délivrance du brevet: **08.06.83 Bulletin 83/23**

(45) Mention de la decision concernant l'opposition: **16.08.90 Bulletin 90/33**

(84) Etats contractants désignés: **BE CH DE FR GB IT LI LU NL SE**

(56) Documents cités:
FR-A-2 125 137
FR-A-2 239 208
NL-A-7 603 369

CHEMICAL ABSTRACTS, vol. 81, JUly 2, 1974, no. 3, page 218 réf. 11969w Columbus, Ohio, US C. POMPEI et al.: "Whey proteins purification by ultrafiltration and dialfiltration"

Lebensmittel-Wiss- u. Technol. Vol. 6 (1973) no 4. pp. 133-137 (Peri et al)

Milk Proteins, McKenzie, Vol I (1970), page 358

(73) Titulaire: **INSTITUT NATIONAL DE LA RECHERCHE AGRONOMIQUE (INRA)**
**149, rue de Grenelle**
**F-75341 Paris Cedex 07 (FR)**

(72) Inventeur: **Roger, Loic**
**27, rue de Brest**
**F-35000 Rennes (FR)**
Inventeur: **Maubois, Jean-Louis**
**La Barre Guibourg**
**F-35740 Pace (FR)**
Inventeur: **Brulé, Gérard**
**5 Cours de Lisbonne**
**F-35000 Rennes (FR)**
Inventeur: **Piot, Michel**
**10 Rue du Bourdonnais**
**F-35000 Rennes (FR)**

(74) Mandataire: **Phélip, Bruno et al**
**c/o Cabinet Harlé & Phélip 21, rue de La Rochefoucauld**
**F-75009 Paris (FR)**

(56) Documents cités:
**Milk Proteins, McKenzie, Vol II (1971), pages 258-325**

**Environmental Science and Technology, Volume 4, No.5, May 1970, pages 437 - 438**
**Nature, Volume 216, November 1967, pages 511-513**

# EP  0 022 696  B2

(56) Documents cités:

Ultra filtration of Colloidal Suspensions,
M.C.Porter, Amicon Corporation, pages 21-30

Recent Advances in Separation Techniques,
Symposium Series 120,American Institute of
Chemical Engeneers

Journal of Dairy Science, Vol.57, No.6, pages
658-664 + 665-670

## Description

L'invention concerne le domaine du traitement du lactosérum en vue d'en extraire des produits de valeur.

Le lactosérum est un produit bien connu qui est issu de l'industrie fromagère. La composition du lactosérum est approximativement celle d'un lait écréme, privé de sa caséine. On distingue en général deux types principaux de lactosérum, un lactosérum doux, ou lactosérum de fromagerie, et les lactosérums de type acide, ou lactosérums de caséinerie.

L'addition de présure au lait provoque une synérèse qui conduit à un lactosérum dénommé lactosérum présure. Si l'emprésurage a lieu a pH du lait ou à un pH légèrement inférieur, par exemple après légère maturation par des levains lactiques, mais au-dessus d'une gamme de 5,8 à 6 environ, le lactosérum prend la dénomination de lactosérum doux. Par ailleurs, l'acidification du lait, soit par addition d'acide minéral, soit par production d'acide lactique (ensemencement du lait par des ferments lactiques) à un pH proche du point isoélectrique des caséines, provoque la floculation de ces dernières. Après séparation du caille, on obtient le lactosérum de type acide.

On définit donc le lactosérum par rapport à la nature de la coagulation du lait. Dans l'industrie fromagère, la plupart des lactosérums sont en fait des lactosérums mixtes où l'un des procédés de coagulation est prédominant par rapport à l'autre. Les lactosérums doux sont issus des fabrications de fromages dits à pâte pressée cuite ou non (Emmental, Gruyère, Cheddar, Cantal, Saint-Paulin, etc . . .). Les lactosérums acides sont issus principalement des fabrications de pâtes fraîches et des caséineries. On trouve également des variétés intermédiaires provenant de la fabrication de la plupart des pâtes molles et des pâtes persillées. Ainsi, la composition des lactosérums est soumise à de grandes variations qui dépendront principalement du lait d'origine et de la technologie fromagère utilisée.

Les lactosérums possèdent des composants intéressants, notamment la fraction azotée qui est essentiellement constituée par les protéines solubles du lait, lesquelles possèdent une valeur biologique élevée, supérieure à 90%. On peut se référer à ce sujet à l'article de E. FORSUM, HAMBRAEUS L. (1977) -Nutritional and biochemical studies of whey products, J. Of Dairy Sc. 60 (3)/370—377. Jusqu'à présent, les trois destinations traditionnelles des lactosérums étaient l'épandage, le rejet en rivière et l'alimentation animale. Mais l'intérêt se porte maintenant vers de nouvelles technologies, impliquant par exemple l'ultrafiltration qui permet de séparer, de concentrer et de purifier sélectivement les composants du lactosérum et de modifier leurs caractéristiques physico-chimiques tout en maintenant et même en améliorant leur qualité nutritionnelle. On recherche donc de plus en plus à l'heure actuelle des techniques de traitement des lactosérums permettant la préparation de produits originaux et variés, susceptibles en particulier de trouver des applications dans l'alimentation. Les techniciens portent un intérêt tout particulier aux protéines contenues dans le lactosérum afin d'obtenir des produits alimentaires variés et capables de répondre à des besoins spécifiques.

De nombreux documents de la technique antérieure illustrent des traitements de lactosérum par ultrafiltration de celui-ci. Dans la technique fromagère, par exemple, il a déjà été proposé d'ultrafiltrer le lactosérum pour produire un rétentat contenant les protéines solubles, ce rétentat étant ensuite réintroduit dans le fromage en cours de fabrication. Mais il existe des procédés d'ultrafiltration du lactosérum qui permettent d'effectuer des séparations différentielles entre ses divers composants. Le procédé de la présente invention se situe dans ce dernier genre de technique.

L'invention a un effet pour objet un procédé permettant d'obtenir, à partir du lactosérum et par une technique d'ultrafiltration, un produit enrichi en α-lactalbumine. Bien qu'en valeur relative, les protéines représentent une faible part de la matière sèche du lactosérum (inférieure à 12%) elles sont l'attrait principal dans la valorisation de ce sous-produit. La fraction protéique, essentiellement constituée par les protéines solubles du lait: β-lactoglobuline, α-lactalbumine, sérum albumine et immunoglobulines, est intéressante en raison de sa valeur nutritionnelle et de ses propriétés fonctionnelles.

De nombreux travaux existent pour caractériser les protéines solubles du lactosérum. En ce qui concerne la β-lactoglobuline on peut par exemple se référer aux travaux de BRAUNITZER, G. CHEN, R. SCHRANK, B. STANGL, A. (1972) Automatic sequence analysis of a protein (β-lactoglobuline AB). Hoppe Seyier's Z. Physiol. Chem. 353 (5) 832—834. D'une façon résumée, on peut observer que la β-lactoglobuline, en raison de la présence d'un groupement SH libre, tendance à polymériser et à exister sous forme d'un équilibre monomère-dimère-octamère. La forme dimère prédomine en général dans les conditions d'ultrafiltration et à une température basse à des pH plus proches du pH isoélectrique (pH 5 environ favorise l'octamérisation). A pH supérieur à 7,5, l'équilibre se déplace en faveur de la forme monomère. La conformation de la β-lactoglobuline est relativement stable au dessous de pH 7. McKenzie, H. A. (1971)-Milk proteins; Vols 1 et 2, Academic Press, New York, a fait une étude sur les formes et caractéristiques de la β-lactoglobuline. L'effet du pH sur la conformation de cette protéine à été confirmé (voir par exemple MIHALYI, E. (1972) Application of proteolytic enzymes to protein structure.

Quant à l'α-lactalbumine, on connaît également sa séquence, voir BREW, K. CASTELLINO, F. J. VANAMAN, T. C. HILL R. L. (1973). The complete amino acid sequence of bovine α-lactalbumin, J. Biol. Chem 245 (17) 4570—4582. A l'inverse de la -lactoglobuline, elle ne possède pas de groupe SH libre. Les travaux de LEE, D. N. et MERSON, R. L. (1976) Prefiltration of cottage cheese whey to reduce fouling of ultrafiltration membranes. J. of Food Sc., 41 403—410, ont montré que la forme des molécules d'α-

lactalbumine peut varier selon la pH. A pH acide, les molécules ont tendance à s'associer sous forme dimère ou trimère. A pH supérieur à 8, on assiste également à une polymérisation de la protéine.

Comme la β-lactoglobuline, la sérum albumine possède un SH libre et existe sous forme de monomère et dimère.

On sait également que la coagulation du lait est obtenue par acidification ou par protéolyse de la caséine K. Cette hydrolyse enzymatique par la présure libère dans le lactosérum un phosphoglycopeptide appelé le caséinomacropeptide (CMP). La quantité de CMP dans les lactosérums varie suivant la nature et le temps de coagulation, elle peut atteindre au maximum 1 g/l dans les lactosérums doux.

De nombreuses autres protéines solubles existent dans le lait et le lactosérum. Leur présence en quantités plus faibles que les précédentes font qu'elles sont moins importants par leur contribution au comportement physico-chimique du concentré protéique de lactosérum que par leur rôle biologique.

La technique la plus ancienne pour extraire les protéines du lactosérum consiste à les insolubiliser par un traitement thermique dénaturant à un pH proche de leur point isoélectrique. Ce procédé, largement répandu, a été récemment revu par ROBINSON, B. P. SHORT, J. L. MARSCHALL, K. R. (1976) Traditional lactalbumin manufacture, properties nand uses, NZ J. Dairy Sc. and Techn. *11* (2) 114—126. L'inconvénient de cette technique est évidemment l'aspect dénaturant. D'autres procédés de laboratoire essentiellement ont essayé de remédier à cet inconvénient. On a par exemple proposé de réaliser une adsorption des protéines sur échangeur d'ions (WARD, J. B. (1976) Separation Processes in the biochemical Industrial. Process Biochemistry *11* (7) 17—20). La technique d'échange d'ions cependant entraîne des difficultés d'automatisation et d'opération en continu, des investissements lourds (volume de résine et d'éluent, concentration des éluats). L'obtention de produits purifiés n'est pas toujours un avantage.

D'autres procédés font appel à des extractions chimiques et ne donnent donc pas complètement satisfaction sur le plan nutritionnel. On a également sugéré des procédés chromatographiques d'échange d'ions (MIRABEL B. (1978) Nouveau procédé d'extraction des protéines du lactosérum. Ann. de la Nutrition et de l'Alim. *32* (2—3), 243—253). On a également utilisé la filtration sur gel, essentiellement au niveau du laboratoire. On peut se référer par exemple aux travaux de LINQUIST, L. O. & WILLIAMS, K. W. (1973). Aspects of whey processing by gel filtration. Dairy Industries, *38* (10) 459—464, ainsi que ceux de FORSUM, E. HAMBRAEUS, L. et SIDDIQT, I. H. (1974). Large scale fractionation of whey protein concentrates. J. of Dairy Sc. *57* (6), 659—664. Le procédé sur gel présente un certain nombre d'inconvénients. Il exige notamment une préconcentration des protéines qui ne devra pas être dénaturante au risque d'altérer la résolution entre les différentes fractions. Ces dernières devront ensuite être elles-mêmes concentrées et séchées. Les faibles propriétés mécaniques des gels et le pouvoir colmatant élevé des lactosérum concentrés en raison de la présence de complexes lipoprotéiques ont fait que cette technique est restée très limitée.

L'ultrafiltration sur membrane, étant donné les progrès réalisés tant sur les appareillages que sur leur mode de mise en oeuvre, s'est largement répandue dans l'industrie laitière aussi bien pour le traitement du lait que pour celui du lactosérum (voir par exemple les travaux de MOCQUOT et al (1971) Préparation de fromage à partir de "préfromage liquide" obtenu par ultrafiltration du lait. Le lait, 51, 508, 495—533.

Lors du passage du lactosérum sur la membrane d'ultrafiltration, l'eau, les sels minéraux solubles, le lactose, les composes azotés de faible poids moléculaire et les vitamines hydrosolubles traversent la membrane. Le produit traversant la membrane se dénomme ultrafiltrat ou perméat. Par contre, les protéines et les constituants associés (calcium, phosphore) les globules gras et les éléments lipophiles sont retunus et se concentrent au fur et à mesure de l'élimination de la phase aqueuse. Ils constituent le rétentat ou concentré protéique. Les concentrés protéiques obtenus par ultrafiltration peuvent être définis soit par le facteur de concentration soit par le degré de pureté des protéines. L'obtention de concentrés de pureté élevée nécessite la mise en oeuvre d'ultrafiltration suivie ou accompagnée d'une diafiltration qui consiste en un lavage des concentrés protéiques. Au cours de la diafiltration, le liquide à ultrafiltrer est mis en contact avec la membrane en même temps qu'une solution, par exemple une solution aqueuse. De nombreuses études ont été faites sur la composition de l'ultrafiltrat de lactosérum. [Voir par exemple HARGROVE et al (1976) Production and properties of deproteinized whey powders. J. of Dairy Sc., *59*(1) 25—33. HIDDINK et al (1978) Ultrafiltration of condensed a whey, Zuivelzicht *68* (48—51) 1064—1066; 1126—1127, KIVIENIEMI L. (1974) Microbial growth during the ultrafiltration of sweet whey and skim milk. Kemia Kemi *12* 791—795]. La composition des rétentats ou concentrés protéiques a également été déterminée. (Voir par exemple HORTON, B. S., GOLDSMITH, R. L. et ZALL, R. R. (1972) Membrane processing of cheese whey reaches commercial scale. Food Technol. *26* 30).

Les conditions pratiques de l'ultrafiltration font que celle-ci ne se déroule pas selon les hypothèses idéales. Par exemple, le rétentat d'ultrafiltration présente une teneur résiduelle relativement importante en matière grasse ainsi qu'en éléments minéraux. En outre, les membranes d'ultrafiltration actuelles présentent une cetaine dispersion du diamètre de leurs pores. Leur pouvoir de coupure n'est donc pas absolument précis et ne correspond pas à une membrane idéale isoporeuse. En outre, la membrane n'est pas inerte. La température, la pression, le pH peuvent modifier ses caractéristiques physiques, de sorte que le diamètre des pores et l'hydratation de la membrane peuvent varier. Selon la nature chimique de la membrane, des interactions de type ionique ou hydrophobe s'établissent avec les protéines et/ou les minéraux. A ces types de liaisons, il fait ajouter un possible emprisonnement physique des molécules dans les pores de la membrane. Tous ces phénomènes modifient la perméabilité de la membrane aux éléments

4

ultrafiltrables ainsi qu'à l'eau. Enfin, il ne faut pas oublier de souligner l'importance de la formation au niveau de la membrane d'une couche de polarisation également dénommée membrane dynamique qui est principalement constituée par des protéines. Sans la maîtrise de ce phénomène, toute amélioration au niveau de la sélectivité des membranes est largement compromise: (Voir MURKES, J. (1978). Quelques opinions sur les applications industrielles de la technologie des membranes. Journées Européennes de la Filtration. Paris 24—10—1978). En d'autres termes, l'aptitude d'une membrane à remplir une fonction donnée ne doit pas être appréciée a priori d'une manière idéale mais il faut obligatoirement essayer la membrane dans les conditions d'utilisation car il est impossible de nègliger la couche protéique qui se forme au cours de l'ultrafiltration et modifie les transferts des solutés au travers de la membrane, réduisant ainsi les performances de l'appareillage et en particulier du débit de perméation. Il peut même observé des modifications qualitatives du rétentat et du perméat. Cette couche joue en effet le rôle d'une seconde membrane et la perméabilité de la membrane totale en cours de fonctionnement d'épendra de son épaisseur mais également de la nature de ses constituants.

Pour ce qui concerne l'ultrafiltration du lactosérum, on peut en particulier se reporter aux travaux de LEE D. N. & MERSON, R. L. (1976) Prefiltration of cottage cheese whey to reduce fouling of ultrafiltration membranes J. of Food Sc. *41* 403—410. Ces auteurs ont déterminé un certain nombre de conditions qui permettent de minimiser l'épaisseur et la densité de la couche de polarisation afin d'améliorer la perméabilité de la membrane. Ils ont noté notamment l'influence du pH qui agit sur la solubilité des protéines. Il est donc recommandé d'ajuster le pH pour tenir compte de l'origine du lactosérum. Voir également HAYES, J. F. DUNKERLEY, J. A. MULLER, L. L. GRIFFIN, A. T. (1974) Studies on whey processing by ultrafiltration II. Improving permeation rates by preventing fouling. The Australian J. of Dairy Tech. *37* (3) 132—140. Ces auteurs prévoient un préchauffage du lactosérum, par exemple à 80°C pendant 15'', qui aurait pour effet d'améliorer les performances des appareillages. D'une façon générale, il est également connu de prétraiter les lactosérum c'est-à-dire de les traiter thermiquement, notamment par pasteurisation pour éviter les contaminations bactériennes. On sait en effet que le lactosérum contient 10 à 20% des bactéries du lait de fabrication. On a donc souvent recommandé un traitement de pasteurisation pour conserver la qualité hygiénique du lactosérum.

Les articles de LEE & MERSON (1976) ainsi que de HAYES précités, auxquels on pourra se référer en cas de besoin, montrent que les conditions de mise en oeuvre de l'ultrafiltration de lactosérum présentent une grande importance pratique.

On connaît également les opérations dites de diafiltration qui consistent à ajouter de l'eau au rétentat et à éliminer simultanément ou successivement une quantité équivalente de perméat. La diafiltration a pour effet d'appauvrir le rétentat en éléments filtrables. Elle peut être soit discontinue, (dilution puis concentrations successives), soit continue (l'eau est ajoutée au même débit que le perméat est éliminé). La diafiltration permet en général d'obtenir des concentrés protéiques de pureté accrue.

A titre de documents illustrant la technique antérieure dans le domaine de l'ultrafiltration, on peut encore citer les documents FR—A—2 125 137 et FR—A—2 239 208, l'extrait des chemical Abstracts Vol. 81, n° 3, July 22, 1974, page 218, col. de gauche abrégé n° 11696 COLUMBUS OHIO (US) faisant référence à l'article de Sci Tecnol. Alimenti 1973, 3 (4) 209—15C. POMPEI et al.

Le brevet FR—A—2 125 137 concerne le délactosage du lait et propose un procédé pour produire un lait contenant tous les constituants des laits naturels, à l'exception du lactose; un tel produit est notamment utilisable pour l'alimentation des diabétiques. Le procédé décrit traite le lait comme matière première et non pas le lactosérum, et il implique en outre l'utilisation d'au moins une opération d'osmose inverse. Typiquement, le procédé du brevet français 2 125 137 consiste à ultrafiltrer le lait, à rècupérer l'ultrafiltrat, à soumettre ce dernier à une osmose inverse en vue d'éliminer le lactose qu'il contient, après quoi l'effluent de l'osmose inverse est remélangé au rétentat d'ultrafiltration pour fournir un lait reconstitué exempt de lactose.

Le brevet FR—A—2 239 208 propose de traiter le lait ou le lactosérum par ultrafiltration en diluant le rétentat avec une solution aqueuse afin, notamment, de produire des laits humanisés. Après ultrafiltration du lactosérum, on obtient un produit qui peut être séché par atomisation et qui, après mélange avec du caséinate de sodium, conduit à additif capable d'être ajouté au lait pour corriger ou modifier le rapport caséine/protéines solubles. Un tel procédé traite donc dans leur ensemble les protéines solubles du lactosérum.

L'article de POMPEI et al cité précédemment, propose également de traiter le lactosérum par ultrafiltration, pour fournir un concentré protéique pouvant être atomisé. Un tel procédé permet d'isoler la totalité des protéines du lactosérum, mais n'enseigne aucun fractionnement de celles-ci.

Les observations de la technique antérieure ont montré que la rétention de protéines solubles de lactosérum par les membranes d'ultrafiltration, telles qu'elles sont classiquement utilisées à l'heure actuelle dans l'industrie, n'est pas totale. La rétention de ces protéines diffère également suivant la nature de celles-ci.

C'est ainsi que l'α-lactalbumine peut passer librement au travers des membranes actuellement utilisées grâce à son poids moléculaire faible (14,000—15.000), sa conformation globulaire compacte et son inaptitude à polymériser à l'état non dénaturé en raison de l'absence de groupes SH libres. Cependant, dans les conditions pratiques de la mise en oeuvre de l'ultrafiltration, on constate une rétention partielle de l'α-lactalbumine qui est certainement due à la présence de la couche de polarisation ou membrane

5

dynamique au droit de la membrane réelle. Quant à la β-lactoglobuline dont on constate également la rétention partielle, son passage à travers la membrane se fait sous forme monomère. Les conditions de pH prennent alors une grande importance.

L'invention tire profit de ces observations de l'art antérieur et propose un procédé qui permet, grâce à la mise en oeuvre d'une technique d'ultrafiltration de lactosérum dans des conditions industrielles, d'obtenir un produit très enrichi en α-lactalbumine, au détriment des autres protéines solubles du lactosérum.

L'invention propose à cet effet un traitement différentiel du lactosérum qui permet, après des ultrafiltrations successives, de sélectionner la friction enrichie en α-lactalbumine. Chacune de ces ultrafiltrations est conduite dans des conditions et avec des membranes bien déterminées.

Le produit obtenue par un tel procédé, à savoir une fraction enrichie en α-lactalbumine, peut avoir diverses applications, en particulier dans le domaine alimentaire, comme substituant ou complément de produits laitiers, notamment à titre d'aliment répondant à des besoins nutritionnels spécifiques, par exemple pour la maternisation des laits et pour la nutrition thérapeutique humaine ou animale.

L'invention a également pour objet l'application à titre de médicaments des produits obtenus par ledit procédé, telle que la réanimation par voie entérale.

L'invention a pour object un procédé pour l'obtention, par ultrafiltration du lactosérum, d'un produit enrichi en α-lactalbumine, ledit procédé étant caractérisé en ce qu'on réalise une première ultrafiltration sur un lactosérum n'ayant pas subi un traitement thermique préalable du genre pasteurisation, et dont le pH est ajusté à une valeur, légèrement inférieure à 7, et au moins égale à 6, 3, ladite première ultrafiltration étant conduite sur des membranes connues dont le seuil de coupure est supérieur à 5000 et qui permettent de retenir les protéines solubles tout en laisant libre passage à l'α-lactalbumine, en ce que l'ultrafiltrat résultant de la première ultrafiltration est soumis à une seconde ultrafiltration, par mise en contact avec une membrane capable de retenir l'α-lactalbumine et ayant un pouvoir de coupure inférieur à 5000, avantageusement entre 1500 et 2000 environ, et en ce qu'on récupère le rétentat de cette deuxième ultrafiltration, lequel constitue le produit recherché.

Le document LEBENSM.-WISS. U. TECHNOL., VOL. 6 (1973) N°4 pages 133—137 (1) (C. PERI et al) mentionne le traitement de lactosérum par ultrafiltration suivie d'une diafiltration. Cependant, le traitement envisagé dans ce document ne correspond pas à celui de la présente invention, notamment en ce qui concerne l'aspect particulier du fractionnement des protéines du lactosérum permettant d'obtenir un produit très enrichi en α-lactalbumine, objet principal de l'invention. L'article de PERI et al arrive même à la conclusion que la diafiltration présente peu d'intérêt dans le cadre de la purification des protéines de lactosérum (cf. p. 133, résumé).

Il importe tout d'abord de définir la matière première utilisée par le procédé de l'invention. La nature propre du lactosérum peut être tout à fait quelconque en ce sens que le procédé est aussi bien applicable au traitement du lactosérum doux de fromagerie qu'aux lactosérum acides. Cependant, les produits obtenus dans chaque cas seront différents. Lorsqu'on part de lactosérum doux, on obtient un produit enrichi en α-lactalbumine présentant une faible proportion de β-lactoglobuline et une certaine quantité de CMP. En revanche, si l'on part de lactosérum acide, le produit enrichi en α-lactalbumine ne comporte pratiquement pas de CMP. Ainsi, selon l'origine du lactosérum, le produit issu du procédé peut contenir plus ou moins ou pas du tout de caséinomacropeptide. Il convient de noter que le CMP existe sous deux formes:

— glycosylée: composé de sept fractions différentes selon la nature et le taux des sucres branchés (galactosamine galactose, acide N-acétyl-neuraminique);

— non glycosylée.

Le CMP contient par ailleurs une ou deux phosphosérines, aucun acide aminé aromatique (tryptophane, phénylalanine, tyrosine) et est riche en thréonine, proline, et sérine.

Selon l'invention, il convient d'utiliser un lactosérum, quelle que soit son origine, n'ayant pas subi de traitement thermique préalable, du genre de celui qui est habituellement réalisé dans le cadre d'une pasteurisation. Cette opération a pour but d'éliminer les contaminations bactériennes éventuelles. Dans le cadre du procédé de l'invention, dès que le lactosérum est collecté il est soumis d'une manière conventionnelle à une opération d'écrémage qui a pour but d'éliminer la matière grasse encore présente dans le lactosérum brut, après quoi il peut être directement soumis à la première ultrafiltration. On peut également le conserver pendant un temps convenable à une température basse, par exemple de l'ordre de 0 à 4°C, tout en évitant cependant la cristallisation du lactose. Bien entendu, pendant la première ultrafiltration, le lactosérum pourra subir une élévation de température de maïnière à augmenter le rendement. Par exemple, la température convenable peut être de l'ordre de 30 à 60°C, de préférence de l'ordre de 45°C. Mais l'ultrafiltration ambiente. Il importe surtout que, avant ou pendant l'ultrafiltration, le lactosérum ne soit pas soumis à une élévation de température aussi élevée que celle impliquée dans un traitement classique de pasteurisation.

Une autre condition importante concernant la mise en oeuvre de la première ultrafiltration est relative au pH du lactosérum. Selon l'invention, en effet, il convient d'ajuster le pH du lactosérum brut à une valeur légèrement inférieure à 7, quoiqu'au moins égale à 6,3 et de préférence de l'ordre de 6,6. Compte tenu des caractéristiques des lactosérums habituels, cet ajustement se fait commodément par addition de composés à réaction basique. En principe, on peut utiliser n'importe quelle base, telle que l'hydroxyde de sodium, l'hydroxyde de potassium, le carbonate de sodium, le carbonate de potassium, l'hydroxyde de calcium, l'hydroxyde d'ammonium et autres composés basiques analogues.

On donne la préférence à l'hydroxyde de potassium compte tenu des applications futures des produits dans le domaine alimentaire.

Par ailleurs, la première ultrafiltration est réalisée dans des conditions parfaitement connues. On peut utiliser, n'importe quel équipement déjà disponible, par exemple des modules d'ultrafiltration a plaques, à faisceaux ou à tubes. Les membranes semi-perméables utilisables sont celles déjà connues pour permettre le rétention des protéines solubles. En général, ces membranes ont un pouvoir de coupure supérieur à 5000, par exemple de l'ordre de 50 000. La nature des ces membranes est quelconque. Il peut s'agir aussi bien de membranes inorganiques qu'organiques. A titre de membranes organiques, on peut utiliser n'importe quel substrat poreux répondant aux définitions ci-dessus. Toutes ces notions sont bien connues de l'homme de l'art dans le domaine de l'ultrafiltration du lait ou du lactosérum et n'onc dont pas besoin d'être explicitées davantage.

Dans les conditions de mise en oeuvre de la première ultrafiltration, la membrane se comporte comme une membrane n'impliquant pas de rétention d'α-lactalbumine et laissant donc libre passage à cette dernière. A l'issue de l'ultrafiltration, on obtient donc, à titre d'ultrafiltrat, une solution enrichie en α-lactalbumine. En effet, dans une telle solution, le rapport β-lactoglobuline/α-lactalbumine est inversé par rapport au lactosérum de départ. En outre l'ultrafiltrat ne comporte pas de protéine dont le poids moléculaire est supérieur à 20 000 environ.

Ainsi qu'on l'a mentionné précédemment, la première ultrafiltration est conduite de manière connue. Au besoin, il est possible de recourir à un essai préalable pour déterminer si une membrane précise convient aux besoins de cette étape, compte-tenu de son comportement dynamique.

Conformément à l'invention, l'ultrafiltrat séparé lors de la première ultrafiltration est soumis à une seconde ultrafiltration, dans laquelle on utilise une membrane capable de retenir l'α-lactalbumine. En règle générale, une telle membrane possède un pouvoir de coupure inférieur à 5000 et de préférence compris entre 1500 et 2000 environ. La nature chimique et/ou physique de la membrane importe peu dès lors qu'elle répond à la condition de rétention de l'α-lactalbumine dans les conditions de mise en oeuvre du procédé. De même que pour la première ultrafiltration, on peut utiliser n'importe quel équipement d'ultrafiltration disponible. La plupart du temps, il est avantageux de réaliser une diafiltration plutôt qu'une ultrafiltration, c'est-à-dire qu'on conduit l'ultrafiltration en ajoutant à l'ultrafiltrat issu de la première ultrafiltration, en continu ou en discontinu, une solution aqueuse ou de l'eau pure ou une solution aqueuse contenant des sels minéraux, en amount de la membrane utilisé dans la deuxième ultrafiltration.

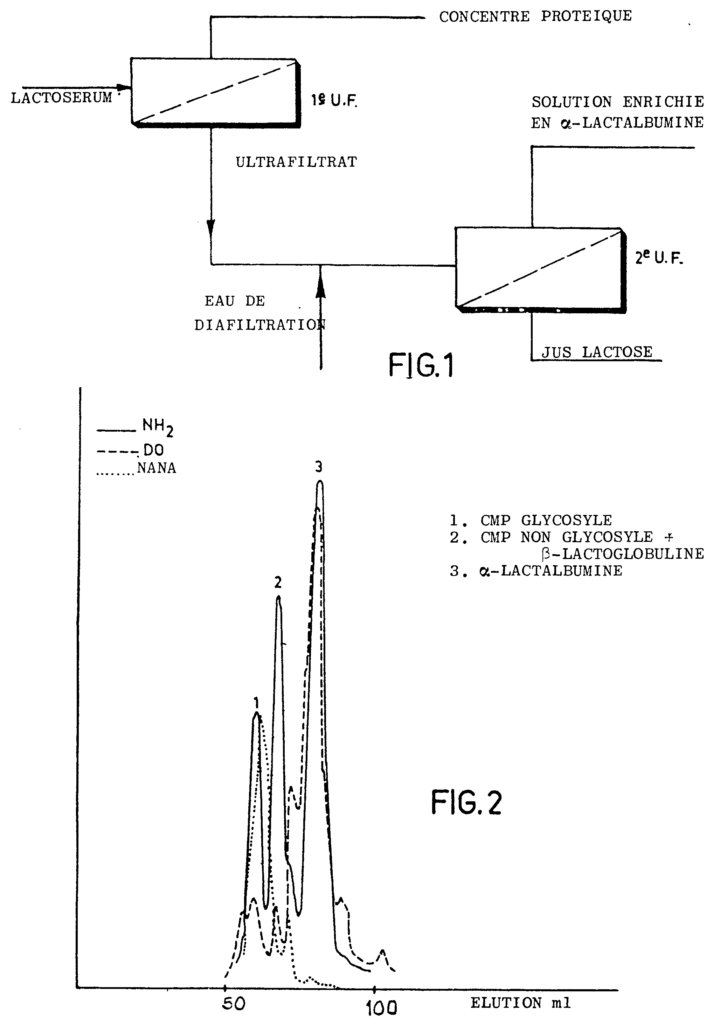

La deuxième ultrafiltration conduit d'une part à un ultrafiltrat consistant en un jus lactosé, et en un rétentat qui constitue le produit recherché selon l'invention et qui consiste en une solution enrichie en α-lactalbumine. L'invention est illustrée par la figure 1 du dessin annexé qui montre schématiquement les étapes du procédé.

Les produits obtenus par le procédé selon l'invention sont utiles dans l'alimentation, en particulier l'alimentation humaine, On sait en effet que le lait humain contient approximativement 40% de caséine et 60% de protéines solubles, mais parmi celles-cine figure pas de β-lactoglobuline. Pour reconstituer un lait se rapprochant le plus possible du lait humain, il convient donc de disposer de produits laitiers ne comportant pas de β-lactoglobuline, tout en répondant par ailleurs aux compositions du lait maternel. Les produits de l'invention répondent à un tel besoin et conviennent donc à ce qu'il est connu d'appeler la maternisation du lait. Par ailleurs, il peut être utile de disposer pour des besoins précis de la nutrition d'un produit enrichi en α-lactalbumine, protéine qui a la particularité de présenter une richesse élevée en tryptophane. Dans de telles applications alimentaires, le produit de l'invention peut être mis en oeuvre à titre de complément ou de substituant d'aliments pour l'homme ou pour l'animal.

Les produits de l'invention peuvent encore recevoir de nombreuses applications en raison de leurs caractéristiques particulières. Il s'agit en effet de produits riches en tryptophane qui peuvent être utilisés comme aliments à des fins diététiques et thérapeutiques.

En particulier, il s'agit de produits dans lesquels le rapport du tryptophane aux acides aminés dits neutres (tyrosine + phénylalanine + leucine + isoleucine + valine) est élevé, notamment supérieur ou égale à 0,06. Le rapport tyrosine/tryptophane est corélativement bas, notamment inférieur à 2,5 et il peut atteindre des valeurs voisines de 1.

Les produits de l'invention sont donc utilisable comme produits diététiques destinés à l'homme ou à l'animal. Ils peuvent également servir de produits ou aliments de réanimation chez des malades nécessitant un apport protéique spécifique. Ces produits répondent à des besoins nutritionnels en cas par exemple de mucoviscidose ou fibrose kystique du pancréas, d'insuffisance rénale, ou pour des malades présentant une atteinte infectieuse ou inflammatoire de la paroi intestinale, ainsi qu'en ces de destruction tissulaire importante après des traumatismes sévères et des brûlures.

Les produits de l'invention peuvent également recevoir des applications dans la nutrition thérapeutique chez l'homme et l'aminal. Des travaux antérieurs (voir en particulier les articles de R. J. Wurtmann et J. D. Fernstrom dans Nutrition Reviews n° 7 Vol. 32 Juillet 1974 p. 193—200 ainsi que dans The American Journal of Clinical Nutrition 28, Juin 1975 p. 638—647) ont montré que les possibilités d'augmenter la teneur en tryptophane disponible à l'intérieur de la cellule cérébrale en jouant sur les teneurs et équilibre en acide aminés des ingestats peuvent présenter un intérêt sur le plan neuro-pharmacologique. Le tryptophane est un précurseur de la sérotonine. De même, une action similaire sur l'apport en tyrosine et en phénylalanine et leur équilibre par rapport aux autres acides aminés, est susceptible d'influencer les taux de dopamine et de noradrénaline. On peut observer par exemple un effet anorexigène en élevant le taux de tryptophane seul, sans pour cela diminuer la valeur biologique des mélanges protéiques par phénomène d'embalance. Le même effet peut être amplifié en restant toujours dans le cadre d'une valeur biologique identique en abaissant le taux de phénylalanine et de tyrosine.

Les produits de l'invention peuvent donc être utilisés, chez l'homme ou l'animal, en vue de la nutrition thérapeutique, notamment pour le traitement de l'obésité, pour mettre à profit leur effet anorexigène ou pour la régulation du comportement alimentaire. En outre, les produits de l'invention peuvent être appliqués pour améliorer l'efficacité médicamenteuse de médicaments permettant, chez l'homme ou l'animal, d'augmenter la production des amines neurotransmettrices, à savoir la sérotonine d'une part et la dopamine et la noradrénaline d'autre part. A titre d'exemple, l'effet des tranquillisants peut être augmenté au cours du transport des animaux ayant reçu un produit de l'invention.

Compte-tenu de la forme physique des nouveaux produits (poudre soluble en milieu aqueux) la forme de présentation ne soulève pas de difficulté. Les nouveaux produits peuvent être administrés en tant que tels par voie entérale, par exemple en mélange avec l'aliment habituel.

Des doses de 0,1 à 2 g/kg par jour sont convenables.

Exemple 1

Dans cet exemple, on a utilisé comme matière de départ un lactosérum de type présure. Ce lactosérum a été obtenu par coagulation de lait écrémé, thermisé (72°C—15 s), non refroidi, par 30 ml de présure Boll $(10^{-4})$ puis filtration.

Après conservation 18 heures à 4°C, ce lactosérum a été ultrafiltré à 45°C sur module DC 10, membrane XM 50 (1,4 m²), de la Société ROMICON. Les membranes XM 50 sont données par le fabricant comme comportant un pouvoir de coupure voisin de 50 000. Le module DC 10 utilise de membranes du type fibres creuses, réparties en faisceaux tubulaires. On a récupéré le perméat d'ultrafiltration et on a suivi sa composition au cours du temps. Les résultats sont rassemblés dans le tableau 1 qui suit.

TABLEAU 1

| | NPN g/l | NT g/l | NPN/N$_T$ | NT/ES |
|---|---|---|---|---|
| UF$_0$ | 0,237 | 2,1 | 0,72 | 3,1% |
| UF$_{1H}$ | 0,250 | 2,6 | 0,62 | |
| UF$_{2H}$ | 0,262 | 3,0 | 0,56 | |
| UF$_{3H}$ | 0,255 | 2,9 | 0,57 | |
| UF$_{4H30}$ | 0,259 | 2,5 | 0,47 | |
| UF$_{5H50}$ | 0,243 | 3,9 | 0,40 | 6,1% |

L'ultrafiltrat obtenu dans la première ultrafiltration sur membrane XM 50 a été repris et de nouveau ultrafiltré sur membrane AM$_2$ à 15°C, en utilisant également un module DC 10 de ROMICON. La surface de membrane était égale à 1,4 m² et la membrane était du type fibres creuses. La membrane AM$_2$ comporte un pouvoir de coupure de l'ordre de 2000, L'évolution de la composition du rétentat au cours de cette deuxième ultrafiltration est rapportée dans le tableau 2 suivant.

8

TABLEAU 2

|  | Rétentat Prot. | NPN 6,38 | Perméat NT | E.S. g/l |
|---|---|---|---|---|
| Ao | 3,1 | 1,5 | 1,6 | 57,0 |
| $A_{22}$ | 4,5 | 1,7 | 1,6 | |
| $A_{42}$ | 5,3 | 1,7 | 1,7 | |
| $A_{62}$ | 7,1 | 1,8 | 1,7 | |
| $A_{82}$ | 8,0 | 1,9 | 1,7 | 60,3 |
| $A_F$ | 12,4 | 2,1 | 1,7 | 60,7 |

On a procédé à l'analyse du rétentat final afin de le caractériser. A cet effet, on a opéré une filtration sur gel G75 en milieu tampon phosphate (pH 7,0) sur une colonne de 2 m × 0,02 à un débit de 15 ml/h). On a effectué le dosage sur l'éluent de l'acide neuraminique, la mesure de la densité optique à 280 nm et le dosage à la ninhydrine à 570 nm. Les résultants sont illustrés par la figure 2. On y distingue trois pics principaux.

1. $DO_{280}$ faible/$NH_2$ 570 NaNa élevé
2. $DO_{280}$ faible/$NH_2$ 570
3. $DO_{280}$ élevé/$NH_2$ 570

L'analyse de l'échantillon total en électrophorèse et des différents pics permet d'affirmer que le rétentat est constitué d'un mélange d'α-lactalbumine, de β-lactoglobuline et de CMP glycosylé ou non.

Afin d'en déterminer les teneurs respectives, on a encore pratiqué des dosages de l'N soluble à différentes teneurs en acide trichloracétique [voir Fox K. et cal (1967) Separation of β-lactoglobuline from other milk serum proteins by trichloracetic acid, Journal of Dairy Science vol. 50 n° 9 p. 1363—1367]. On sait alors que:

à 2%: restent solubles 75% environ de la β-lactoglobuline, la totalité du CMP, un reliquat d'α-lactalbumine — N soluble (peptides + acides aminés libres).

à 4%: restent soluble 50% environ de la β-lactoglobuline, la totalité du CMP, un reliquat d'α-lactalbumine-N-soluble (peptides + acides aminés libres).

à 6%: reste soluble le CMP total-N soluble.

à 12%: reste soluble le CMP glycosylé-N soluble.

Résultats:

|  | 2% | 4% | 6% | 12% |
|---|---|---|---|---|
| ppm d'N | 262 | 224 | 183 | 119 |

Le produit répond à la composition pondérale approximative ci-après:

| | |
|---|---|
| α-lactalbumine: | 47% |
| β-lactoglobuline: | 20% |
| CMP: | 25% |
| soluble: | 8% |

A partir des chiffres ci-dessus et de la composition en acides aminés de chacun des constituants, on à détermine l'aminogramme théorique qui a été comparé à l'aminogramme réel.

On a trouvé un coefficient de corrélation de 0,96. En écartant l'acide glutamique et la proline dont on sait qu'ils sont les principaux acides aminés de la phase soluble du perméat d'U.F. (Hargrove et al. 1976 J. Dairy Science 59, 25—33) le coefficient devient 0,986, ce qui et en bon accord avec la réalité.

Il est intéressant de noter, de par la présence de l'α-lactalbumine, la richesse en tryptophane (près de deux fois supérieure à la teneur normale du concenté initial).

|  | Modèle théorique (-soluble) | Aminogramme |
|---|---|---|
| Ile | 7,6 | 6,8 |
| Leu | 8,9 | 8,2 |
| Hys | 8,7 | 8,8 |
| Met | 1,6 | 1,6 |
| Cyst | 3,7 | 2,4 |
| Phe | 2,8 | 3,1 |
| Tyr | 3,3 | 3,3 |
| Thr | 7,8 | 7,0 |
| Trp | 3,4 | 3,3 |
| Val | 5,3 | 5,8 |
| Ars | 1,1 | 1,6 |
| His | 1,7 | 1,9 |
| Ala | 3 | 3,7 |
| Asp | 11,5 | 11,2 |
| Glu | 13,9 | 18,1 |
| Gly | 2,0 | 2,3 |
| Pro | 4,7 | 6,1 |
| Ser | 5,0 | 4,7 |

Le produit est par ailleurs très soluble et présente un goût agréable sucré, goût qui peut être causé par la présence des CMP glycosylés.

Exemple 2

Dans cet exemple, on a traité du lactosérum lactique. Le lactosérum issu d'une coagulation lactique ne présente pas de CMP.

La coagulation du lait a été obtenue par addition d'acide lactique jusqu' à pH 4,6. Après élimination du caillé, le pH a été ajusté à pH 6,6 par addition d'hydroxyde de potassium. Du citrate trisodique 2/1000 a été ajoute pour éviter les problèmes de colmatage des membranes par les sels de calcium. Préalablement à l'ultrafiltration, le lactosérum acide a été soumis à une centrifugation à 1000 g pendant 15 minutes.

On a ensuite opéré l'ultrafiltration à 25°C sur module DC 10 avec des membranes XM 50 (voir exemple 1). Les compositions du perméat et du rétentat au cours de cette ultrafiltration sont indiquées dans le tableau 3.

L'ultrafiltrat précédemment obtenu a été ensuite de nouveau ultrafiltré sur membrane AM$_2$ avec un module DC 10 de Romicon, la température d'ultrafiltration étant égale à 15°C. La composition du rétentat et du perméat est indiquée dans le tableau 4.

Le rétentat de cette deuxième ultrafiltration, qui constitue le produit recherché, répond donc à la composition pondérale approximative suivante:

EP 0 022 696 B2

| β-lactoglobuline | 37% |
| α-lactalbumine | 56% |
| Azote soluble 12% | 7% |

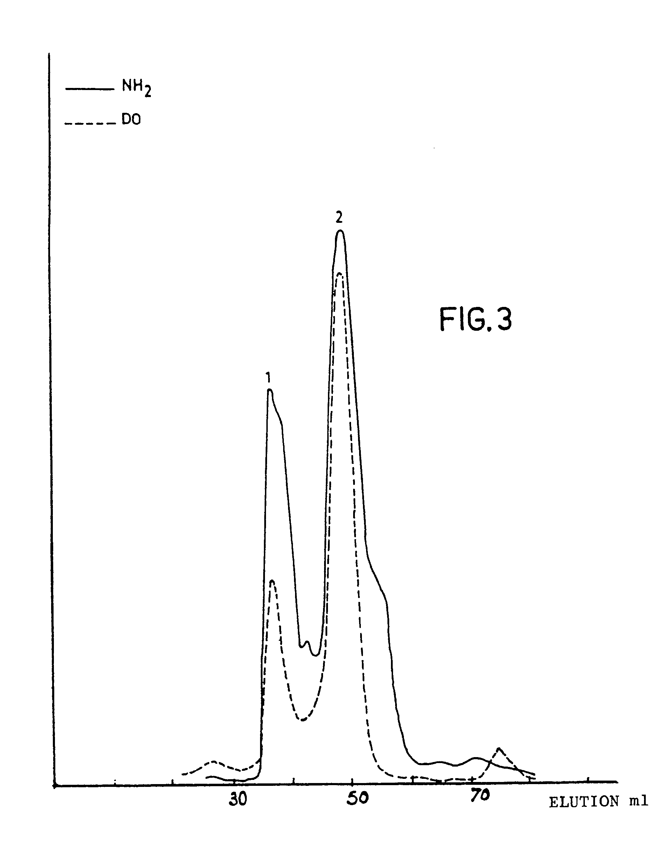

Une filtration sur gel réalisée dans les mêmes conditions qu'à l'exemple 1 mais sur une colonne de 1 mètre contenant du gel G 75 fait apparaître nettement le pic 1 correspondant à l'α-lactalbumine et le pic 2 à la β-lactoglobuline. La figure 3 des dessins annexés correspond à ce cas.

L'aminogramme théorique de cette solution protéique serait:

| Ile | 6,4 | Val | 4,9 |
| Leu | 12,2 | Arg | 1,7 |
| Lys | 10,2 | His | 2,2 |
| Met | 1,7 | Ala | 3,8 |
| Cys | 4,8 | Asp | 14,7 |
| Phe | 3,8 | Glu | 14,4 |
| Tyr | 4,4 | Gly | 23 |
| Thr | 4,9 | Pro | 2,7 |
| Trp | 4,4 | Ser | 4,2 |

Exemple 3

Cet exemple concerne la préparation de lait maternisé. Un produit répondant à ce besoin possède la composition suivante:

| — Protéines dont 0,82 g produit de l'exemple 1 ou 2 ci-dessuss dont 0,83 g de protéines totales de lait | 1,65 g |
| — Lipides dont huile végétale riche en acides gras ou acides polyinsaturés: 1 g | 3,5 g |
| — Glucides: lactose | 7,5 g |
| — Vitamines A, E, B₁, B₂, B₆, B₁₂ PP panthoténate de calcium, acide folique, C, Biotine, K | selon les recommandations de l'ESPGAN* Committe on Nutrition "Guidelines on Infant nutrition" 1974 |
| — Eléments minéraux fer, sodium, calcium, potassium, magnésium, manganèse, phosphore chlor, cuivre, zinc | selon les recommandations de l'ESPGAN Committe on Nutrition "Guidelines on Infant nutrition" 1974 |

* European Society of Paediatric Gastroenterology and Nutrition.

Exemple 4

Cet exemple concerne un produit de réanimation utilisable par voie entérale chez des malades nécessitant un apport protéique de l'ordre de 7 à 12% de l'Apport Calorique Total. Un tel produit répond à des besoins nutritionnels en cas de mucoviscidose ou fibrose kystique du pancréas, d'insuffisance rénale ainsi que pour des malades présentant une atteinte infectieuse ou inflammatoire de la paroi intestinale. Ces protéines sont amenées de préférence sous forme pré-digérée.

11

Une composition centésimale appropriée est la suivante:

| | |
|---|---|
| — *protéines* | 2,50 g |
| dont 50% protéines totales de lait | |
| 50% produit de l'invention | |

— *lipides:*
mélange à parties égales de:

| | | |
|---|---|---|
| — huile de beurre | 0,5 g | |
| — T.C.M. | 0,5 g | |
| — huile de maïs | 0,5 g | 4,10 g |
| — huile de tournesol | 0,5 g | |
| — monostéarate de glycérol | 2,1 g | |

— *glucides:*

| | | |
|---|---|---|
| — polymères de glucose | 10 g | |
| — glucose | 1.5 g | 13,00 g |
| — galactose | 1,5 g | |

— *vitamines:*

| | |
|---|---|
| A, D, E, B$_1$, B$_2$, PP, B$_5$, B$_6$, B$_{12}$, acide folique, biotine, Vit. C | selon les recommandations FAO/OMS |

— *éléments minéraux:*
(calcium, sodium, potassium, magnésium, phosphore, zinc, fer, cuivre, manganèse, chlore, iode) — 0,455 g

— *eau distillée* — q.s.p. 100

Exemple 5

Cet exemple concerne un produit de réanimation utilisable par voie entérale chez des malades nécessitant un apport protéique de l'ordre de 25% de l'apport calorique total, sous forme prédigérée et un apport lipidique faible. Il peut en être ainsi en cas de destruction tissulaire importante après grands traumatisme, et de brûles.

Une composition centésimale appropriée est la suivante:

| | |
|---|---|
| —*protéines* | 8 g |
| dont 50% protéines de viande | |
| (viande de boeuf parée et dégraissée) | |
| 50% produit de l'invention | |

— *lipides:*

| | | |
|---|---|---|
| — T.C.M. | 1,40 g | |
| — huile très riche en acides gras essentiels | 1,40 g | 2,90 g |
| — émulsifiant | 0,10 g | |

— *glucides:*

| | | |
|---|---|---|
| — petits polymères de glucose | 12,7 g | |
| — glucose | 3 g | 18,7 g |
| — galactose | 3 g | |

— *vitamines:*

| | |
|---|---|
| A, D, E, B$_1$, B$_2$, PP, B$_5$, B$_6$, B$_{12}$, acide folique, biotine, Vitamine C | selon les recommandations FAO/OMS |

— *éléments minéraux:*
(calcium, sodium, potassium, magnésium, phosphore, zinc, fer, cuivre, maganèse, chlore, iode) — 0,455 g

— *eau distillée* — q.s.p. 100

12

TABLEAU 3

| | RETENTAT | | N_T | NPN12% | PERMEAT | | |
| | N_T g/l | NPN12% ppm | | | NPN2% | ES | NPN12%/N_T |
|---|---|---|---|---|---|---|---|
| 0 | 7,7 | 52,8 | | | | | |
| 1 | | | 2,0 | 294 | 220 | 58,1 | 70,2 |
| 2 | | | | 224 | | | |
| 3 | 16,3 | | 2,7 | 249 | | | 59,0 |
| 4 | | | | 242 | | | |
| 5 | 23,6 | | 3,2 | 241 | 326 | | 48,3 |
| 6 | | | | 243 | | | |
| 7 | | | | 245 | | | 50 |
| 8 | 24,8 | | 3,1 | 247 | 333 | | |
| 9 | | | | 254 | | | 52,7 |
| 10 | 25,8 | | | 256 | | | |
| Ret. fin | 21,2 | | | 262 | 314 | | |
| Perméat moyen | | | 3,1 | 249 | 305 | 63,9 | |

A partir des valeurs $TCA_{2\%}$ et $TCA_{12\%}$, la composition moyenne du perméat en ultrafiltrat est la suivante:
N 450 ppm se répartissant en: 60 ppm $\beta$ lactoglobuline 13,3 %
250 ppm N soluble 55 %
140 ppm $\alpha$ lactalbumine 31 %

TABLEAU 4

| | RETENTAT | | | | | PERMEAT | | | |
| | N_T g/l | NPN2% ppm | NPN12% ppm | ES g/l | N_T/ES | N | NPN12 ppm | NPN/N | N/ES |
|---|---|---|---|---|---|---|---|---|---|
| 0 | 3,1 | 305 | 249 | 63,9 | 4,8 | | | | |
| 1 | | | | | | 1,40 | 198,4 | 88 | 2,7 |
| 2 | 4,5 | | | | | | | | |
| 3 | 5,5 | | 265 | 69,6 | 7,8 | 1,80 | | | |
| 4 | 6,8 | | | | | | | | |
| 5 | 9,1 | | 269 | 73,8 | 12,4 | 1,9 | | | |
| 6 | 9,7 | | | | | | | | |
| D | | | | | | | | | |
| 7 | 12,4 | | 203,1 | 54,3 | 22,9 | 1,4 | | | |
| 8 | 12,2 | | | | | | | | |
| 9 | 12,8 | 873 | 121 | 32,1 | 39,8 | 0,61 | 96 | 100 | 2,7 |
| * Ret | 15,9 | | 132 | 35,3 | 45 | | | | |

* Rétentat final après concentration.

## Revendications

1. Procédé pour l'obtention, par ultrafiltration du lactosérum, d'un produit enrichi en α-lactalbumine, ledit procédé étant caractérisé en ce qu'on réalise une première ultrafiltration sur un lactosérum n'ayant pas subi un traitement thermique préalable du genre pasteurisation, et dont le pH est ajusté à une valeur légèrement inférieure à 7, et au moins égale à 6,3, ladite première ultrafiltration étant conduite sur des membranes connues dont le seuil de coupure est supérieur à 5.000 et qui permettent der retenir les protéines solubles tout en laissant libre passage à l'α-lactalbumine, en ce que l'ultrafiltrat résultant de la première ultrafiltration est soumis à une seconde ultrafiltration, par mise en contact avec une membrane capable de retenir l'α-lactalbumine et ayant un pouvoir de coupure inférieur à 5.000, avantageusement entre 1.500 et 2.000 environ, et en ce qu'on récupère le rétentat de cette deuxième ultrafiltration, lequel constitue le produit recherché.

2. Procédé selon la revendication 1, caractérisé en ce qu'on ajuste le pH du lactosérum à une valeur de l'ordre de 6,6.

3. Procédé selon l'une revendications 1 ou 2, caractérisé en ce que le réglage du pH se fait par addition au lactosérum de composés à réaction basique, tels que l'hydroxyde de sodium, l'hydroxyde de potassium, le carbonate de sodium, le carbonate de potassium, l'hydroxyde de calcium, l'hydroxyde d'ammonium, l'hydroxyde de potassium étant préféré.

4. Procédé selon l'une quelconque des revendications 1 à 3, caractérisé en ce que la première ultrafiltration est conduite à une température de 30 à 60°C.

5. Procédé selon l'une quelconque des revendications 1 à 4, caractérisé en ce qu'on soumet l'ultrafiltrat séparé lors de la première ultrafiltration à une seconde ultrafiltration, à l'aide d'une membrane capable de retenir l'α-lactalbumine, ladite membrane ayant un pouvir de coupure inférieur à 5000, et de préférence compris entre 1500 et 2000 environ, et à une température voisine de la température ambiante ou légèrement inférieure, par exemple de l'ordre de 15°C.

6. Procédé selon la revendication 5, modifié en ce que la deuxième ultrafiltration est remplacée par une diafiltration, au cours de laquelle on ajoute, en continu ou en discontinu, à l'ultrafiltrat issu de la première ultrafiltration, une solution aqueous contenant des sels minéraux ou de l'eau pue en amont de la membrane mise en oeuvre dans ladite deuxième ultrafiltration.

7. Application à titre de médicaments des produits obtenus par le procédé selon l'une quelconque des revendications 1 à 6.

8. Application selon la revendication 7 dans laquelle les produits sont contenus dans un produit de réanimation administrable par voie entérale.


**Patentansprüche**

1. Verfahren zur Gewinnung eines an α-Lactalbumin angereicherten Produkts durch Ultrafiltration des Lactoserums, dadurch gekennzeichnet, daß man eine erste Ultrafiltration am einem Lactoserum vornimmt, daß keiner vorherigen thermischen Behandlung nach Art einer Pasteurisierung unterworfen und dessen pH auf einen Wert, der leicht unter 7 liegt und wenigstens 6,3 gleich ist, eingestellt worden ist, wobei die erste Ultrafiltration auf bekannten Membranen vorgenommen wird, deren Trennschwelle über 5000 liegt und die die Zurückbehaltung der löslichen Proteine gestetten, jedoch dem α-Lactalbumin den freien Durchgang gestatten, das aus der ersten Ultrafiltration resultierende Ultrafiltrat einer zweiten Ultrafiltration durch Inberührungbringen mit einer Membran unterwirft, die das α-Lactalbumin zurückzubehalten vermag und ein Trennvermögen unterhalb von 5000, vorteilhaft zwischen etwa 1500 und 2000 aufweist, und daß man den Rückstand dieser zweiten Ultrafiltration, der des gewünschte Produkt darstellt, gewinnt.

2. Verfahren nach Anspruch 1, dadurch gekennzeicknet, daß man den pH des Lactoserums auf einem Wert in der Größenordnung von 6,6 einstellt.

3. Verfahren nach einem der Ansprüche 1 oder 2, dadurch gekenzeichnet, daß man die Regelung des pH-Wertes durch Zusatz von basisch reagierenden Verbindungen, z.B. Natriumhydroxid, Kaliumhydroxid, Natriumcarbonat, Kaliumcarbonat, Calciumhydroxid, Ammoniumhydroxid, zum Lactoserum vornimmt, wobei man Kaliumhydroxid bevorzugt.

4. Verfahren nach einem beliebigen der Ansprüche 1 bis 3, dadurch gekennzeichnet, daß die erste Ultrafiltration bei einer Temperatur von 30 bis 60°C durchgeführt wird.

5. Verfahren nach einem beliebigen der Ansprüche 1 bis 4, dadurch gekennzeichnet, daß man das bei der ersten Ultrafiltration abgetrennte Ultrafiltrat einer zweiten Ultrafiltration mit Hilfe einer Membran, die α-Lactalbumin zurückzuhalten vermag und ein Trennvermögen unterhalb von 5000, vorzugsweise zwischen etwa 1500 und 2000 aufweist, bei einer Temperatur in der Nähe von Umgebungstemperatur oder leicht darunter, beispielsweise in der Größenordnung von 15°C, unterwirft.

6. Verfahren nach Anspruch 5, das insofern modifiziert ist, als die zweite Ultrafiltration durch eine Diafiltration ersetzt ist, in deren Verlauf man kontinuierlich oder diskontinuierlich dem von der ersten Ultrafiltration kommenden Ultrafiltrat eine wäßrige Lösung, die Mineralsalze enthält, oder reines Wasser oberhalb der bei dieser zweiten Ultrafiltration eingesetzten Membran zusetzt.

7. Verwendung als Medicament der Produkte, die durch den Verfahren nach einem beliebigen der Ansprüche 1 bis 6 bekommen sind.

8. Verwendung nach Anspruche 7 in welcher die Produkte in einem auf enterlem Wege verabreichbaren Reanimationsprodukt enthält sind.


**Claims**

1. Process for obtaining, through ultrafiltration of whey, an α-lactalbymin-enriched product, said process being characterized in that a first ultrafiltration is effected on a whey which has not undergone a previous thermal treatment of the pasteurization type, and which has its pH adjusted to a value slightly lower than 7, at and least equal to 6.3, said first ultrafiltration being conducted on known membranes having a cut-off power higher than 5,000 and able to retain the soluble proteins while permitting free passage of α-lactalbumin, in that the ultrafiltrate resulting from the first ultrafiltration is subjected to a second ultrafiltration, by contacting with a membrane able to retain α-lactalbumin and having a cut-off power lower than 5,000, advantageously between about 1,500 and 2,000, and in that the retentate from said second ultrafiltration is recovered, this constituting the desired product.

2. Process according to claim 1, characterized in that the whey pH is adjusted to a value of the order of 6.6.

14

3. Process according to either of claims 1 or 2, characterized in that the pH adjustment is effected through addition to the whey of basic reactive compounds, such as sodium hydroxide, potassium hydroxide, sodium carbonate, potassium carbonate, calcium hydroxide, ammonium hydroxide, potassium hydroxide being preferred.

4. Process according to any of claims 1 to 3, characterized in that the first ultrafiltration is conducted at a temperature of 30 to 60°C.

5. Process according to any of claims 1 to 4, characterized in that the ultrafiltrate separated upon the first ultrafiltration is subjected to a second ultrafiltration, by means of a membrane able to retain α-lactalbymin, said membrane having a cut-off power lower than 5000, and preferably ranging from about 1500 to about 2000, at a temperature close to the ambient temperature or slightly lower, e.g. of the order of 15°C.

6. Process according to claim 5, modified in that the second ultrafiltration is replaced by a difiltration, during which there is added, continuously or discontinuously, to the ultrafiltrate coming from the first ultrafiltration, an aqueous solution containing mineral salts or pure water upstream of the membrane used in said second ultrafiltration.

7. Use as drugs of the products obtained by the process according to any one of the claims 1 to 6.

8. Use according to claim 7 in which the products are contained in a reanimation product dispensable by the enteral route.

CONCENTRE PROTEIQUE

LACTOSERUM

1º U.F.

SOLUTION ENRICHIE
EN α-LACTALBUMINE

ULTRAFILTRAT

2ᵉ U.F.

EAU DE
DIAFILTRATION

JUS LACTOSE

FIG.1

—— NH$_2$
---- DO
........ NANA

3

1. CMP GLYCOSYLE
2. CMP NON GLYCOSYLE +
        β-LACTOGLOBULINE
3. α-LACTALBUMINE

2

1

FIG.2

50                    100                ELUTION ml

1

FIG. 3